# FASCICULE DE BREVET EUROPEEN

(11) **EP 1 335 258 B1**
(45) Date de publication et mention de la délivrance du brevet: **30.08.2006**
(21) Numéro de dépôt: 03352001.6
(22) Date de dépôt: 21.01.2003
(51) Int. Cl.: G05D 1/06

(54) **Procédé de guidage d'un aéronef en phase finale d'atterrissage et dispositif correspondant**
Verfahren zum Leiten eines Flugzeuges während der Endphase der Landung und dazugehörige Vorrichtung
Method for guiding an aircraft in a final landing phase and corresponding device

(30) Priorité: 25.01.2002 FR 0200928
(43) Date de publication de la demande: 13.08.2003
(73) Titulaire: AIRBUS France, 31060 Toulouse (FR)
(72) Inventeur: Robert, Paul Henry, 31500 Toulouse (FR); Juanole, Guy, 31770 Colomiers (FR); Devy, Michel, 31400 Toulouse (FR)
(74) Mandataire: Santarelli

(56) Documents cités:
- DE-A- 19 521 600
- FR-A- 2 808 588
- US-A- 4 866 626
- US-A- 5 235 513
- Y.-L. TANG & R. KASTURI: "RUNWAY DETECTION IN AN IMAGE SEQUENCE" PROCEEDINGS OF THE SPIE, vol. 2421, 9 - 10 février 1995, pages 181-190, XP008011213 SAN JOSE USA
- PATENT ABSTRACTS OF JAPAN vol. 018, no. 440 (M-1657), 17 août 1994 (1994-08-17) & JP 06 135392 A (MITSUBISHI HEAVY IND LTD), 17 mai 1994 (1994-05-17)

## Description

La présente invention concerne un procédé de guidage d'un avion en phase finale d'atterrissage ainsi qu'un dispositif pour la mise en oeuvre de ce procédé.

Plusieurs systèmes de guidage procurant une aide pour la navigation et le guidage d'un avion existent. Les systèmes connus actuellement s'appellent ILS, MLS, GPS, APALS.

Le système ILS (Instrument Landing System ou système d'atterrissage aux instruments) fonctionne à l'aide de radio-balises installées le long d'un chemin d'approche d'un aéroport et de récepteurs correspondants installés à bord de l'avion. Ces récepteurs coopèrent avec des indicateurs de bord informant le pilote de sa position relative par rapport à une trajectoire idéale. Ces indicateurs comportent une aiguille horizontale et une aiguille verticale et en gardant ces deux aiguilles centrées, le pilote peut maintenir son avion aligné sur la ligne centrale de la piste tout en conservant une pente de descente la plus constante possible jusqu'à l'atterrissage.

Le système MLS (Microwave Landing System ou système d'atterrissage micro-ondes) fonctionne sensiblement comme le système ILS mais utilise des micro-ondes et non pas des faisceaux radio-électriques. De ce fait, le système MLS présente par rapport au système ILS une plus grande immunité aux signaux réfléchis sur des bâtiments environnant la piste d'atterrissage.

Plusieurs systèmes utilisent la technologie GPS (Global Positioning System ou système de positionnement global). Ces systèmes fonctionnent à l'aide d'une constellation de satellites en orbite autour de la Terre. Un appareil à bord de l'avion détermine la position de celui-ci en utilisant la mesure des distances qui le séparent de plusieurs satellites dont les positions sont connues. En corrélant la position de l'avion et celle de la piste d'atterrissage, une aide peut être fournie au pilote. De nombreux avions utilisent déjà l'information GPS comme une aide supplémentaire (par rapport aux systèmes classiques comme des centrales inertielles) pour trouver leur chemin dans le ciel. Toutefois, les systèmes de type GPS ne sont pas assez précis pour permettre le guidage d'un avion jusque dans sa phase finale d'atterrissage. En effet, la précision des systèmes GPS est de l'ordre d'une dizaine de mètres, ce qui n'est pas suffisant pour garantir à un avion de se poser sur une piste d'atterrissage et non pas à côté de celle-ci.

Le système APALS (Autonomous Precision Approach Landing System ou système d'approche et d'atterrissage autonome de précision) est dans sa version de base un système autonome. Son principe repose sur l'utilisation d'antennes fixes et du radar météo. Ce système utilise des images du radar météo avec sa propre connaissance du terrain pour déterminer la position et l'altitude de l'avion. Ce système peut être combiné avec un système ILS et/ou GPS. A priori, un tel système APALS n'a jamais été embarqué sur un avion en condition opérationnelle.

Le principal inconvénient de ces dispositifs est qu'il nécessite la présence d'installations au sol. Même pour l'APALS, qui est un système autonome, des antennes fixes extérieures sont nécessaires.

La présente invention a alors pour but de fournir un procédé de guidage en phase finale d'atterrissage qui soit entièrement autonome et ne nécessite pas d'installation spécifique au sol pour réaliser un atterrissage de l'avion.

A cet effet, elle propose un procédé de guidage en phase finale d'atterrissage pour un aéronef qui comporte les étapes suivantes :
a) prise de vue du sol à partir d'un dispositif de prise de vue embarqué à bord de l'aéronef et obtention d'une image,
b) analyse de l'image dans le but de détecter une zone aéroportuaire,
c) détection d'une zone aéroportuaire et sélection d'une piste pour l'atterrissage,
d) suivi de la piste d'atterrissage sélectionnée durant l'approche de l'aéronef, par suivi visuel sur les images fournies par le dispositif de prise de vue de la piste d'atterrissage sélectionnée,
e) suivi de la piste d'atterrissage lorsque l'aéronef est très proche du sol par analyse des images fournies par le dispositif de prise de vue afin de déterminer la position de l'aéronef par rapport à la piste d'atterrissage.

Un tel procédé de guidage permet sans nécessiter de moyens extérieurs à l'aéronef d'assister le pilote dans une phase finale d'atterrissage ou bien même de fournir à un système de pilotage automatique des informations pour réaliser un atterrissage automatique.

Dans ce procédé de guidage, les étapes se déroulent de préférence dans l'ordre indiqué de a) à e). Toutefois, des modifications sont possibles dans le déroulement de ces étapes. Ainsi par exemple si la piste est perdue au cours du suivi de l'étape d), une réinitialisation consistant à retourner à l'étape b) peut être réalisée.

Une manière originale pour la réalisation de l'étape b) du procédé de guidage décrit ci-dessus est proposée. Il s'agit dans cette étape de reconnaître sur une image 2D des segments qui sont parallèles dans l'espace 3D représenté. Il est connu que deux lignes parallèles dans l'espace 3D, lorsqu'elles sont photographiées, ne restent pas parallèles le plus souvent sur la photo 2D réalisée. Une façon originale de repérer des lignes parallèles dans l'espace sur une image plan est proposée ici. A l'étape b) du procédé de guidage décrit plus haut, de façon originale, on peut prévoir que l'analyse est réalisée en recherchant sur l'image des segments de droites sensiblement parallèles et que la détection d'une piste d'atterrissage est réalisée en appariant de tels segments de droite. Bien entendu, cette façon d'opérer pour repérer une piste d'atterrissage pourrait être adaptée au repérage d'autres objets présentant dans l'espace des lignes parallèles.

La recherche de segments parallèles s'effectue de préférence en découpant de façon régulière l'intervalle des directions possibles [-π/2 ; π/2] en N classes et en associant chaque segment à une classe, deux segments étant alors considérés comme parallèles s'ils appartiennent à une même classe. Des conditions supplémentaires peuvent alors être définies pour considérer que deux segments "parallèles" de l'image correspondent à deux segments parallèles de l'espace. Ainsi deux segments "parallèles" seront par exemple retenus lorsque les conditions suivantes sont remplies :
- ces segments appartiennent à une même classe de directions,
- chacun de ces segments présente une longueur minimale,
- ces deux segments se font face avec un taux de recouvrement minimum,
- la distance séparant ces deux segments est inférieure à une valeur prédéterminée.

Ces conditions sont particulièrement adaptées à la recherche d'une zone aéroportuaire sur une image 2D prise d'avion à distance de cette zone. Pour la recherche d'autres objets présentant des segments caractéristiques parallèles dans l'espace 3D, d'autres conditions pourront être choisies.

Pour parfaire la recherche d'une zone aéroportuaire (ou d'un autre objet), il est envisageable, pour chaque paire de segments parallèles, de déterminer un point de fuite qui est le point d'intersection théorique des deux segments sensiblement parallèles et deux paires de segments sont ensuite regroupées dans la mesure où la distance entre les deux points de fuite correspondants est inférieure à un seuil prédéterminé.

Dans le procédé de guidage décrit ci-dessus, l'étape d) de suivi de la piste d'atterrissage met par exemple en oeuvre un procédé de suivi visuel qui comporte les étapes élémentaires suivantes :
d1) initialisation : la piste d'atterrissage sélectionnée est extraite de l'image et modélisée et une fenêtre dans laquelle la piste a été trouvée est définie,
d2) prédiction : la position de la piste d'atterrissage dans l'image courante est prédite en fonction de la position occupée dans l'image précédente et une fenêtre correspondante est définie,
d3) extraction de caractéristiques: une représentation adaptée des contours et/ou points d'intérêt de la fenêtre est fournie,
d4) appariement : la piste d'atterrissage est recherchée dans la fenêtre en fonction de la prédiction, et
d5) si nécessaire, mise à jour de la représentation de la piste d'atterrissage et/ou de la vitesse du mouvement apparent de cette piste,
les étapes d2) à d5) étant des étapes itératives.

L'étape de prédiction, dans le cas présent de suivi de piste d'atterrissage en phase finale d'approche d'un aéronef, peut éventuellement être omise.

Le suivi de la piste d'atterrissage à l'étape e) est par exemple réalisé en analysant sur l'image courante la couleur et la texture de ses pixels afin de classifier ces pixels comme appartenant ou non à la piste d'atterrissage.

Dans une autre forme de réalisation du procédé de guidage selon l'invention, le suivi de la piste d'atterrissage à l'étape e) peut être réalisé en recherchant sur l'image le bord de la piste et/ou un marquage sur la piste.

Le passage de l'étape d) à l'étape e) peut être soumis à la réalisation d'une condition prédéterminée. A titre d'exemple, le passage de l'étape d) à l'étape e) peut se réaliser lorsque le seuil de la piste n'est plus visible sur les images. On suppose ici que la piste d'atterrissage comporte deux bords longitudinaux parallèles reliés à une extrémité par un seuil.

La présente invention concerne aussi un dispositif de guidage en phase finale d'atterrissage d'un aéronef, comportant au moins un calculateur et un afficheur placé dans le cockpit, caractérisé en ce qu'il comporte une caméra reliée audit calculateur, en ce que ledit calculateur présente des moyens pour effectuer l'acquisition et le traitement d'images vidéo, et en ce que ledit calculateur est relié à l'afficheur placé dans le cockpit.

La caméra utilisée est avantageusement une caméra de type CCD (Charge Coupled Device ou dispositif à transfert de charge).

Dans une forme de réalisation préférée, le dispositif de guidage comporte au moins deux caméras vidéo.

De préférence, chaque caméra est reliée audit calculateur via une liaison fibre optique.

Pour permettre la réalisation d'atterrissages automatiques, le dispositif de guidage est avantageusement tel que le calculateur est relié à un dispositif de pilotage automatique.

Enfin, la présente invention concerne également un aéronef, caractérisé en ce qu'il comporte un dispositif de guidage tel que décrit ci-dessus.

Les détails et avantages de la présente invention ressortiront mieux de la description qui suit, faite en référence au dessin schématique annexé sur lequel :
Figure 1 est un organigramme général d'un procédé selon l'invention,
Figure 2 représente schématiquement un dispositif pour la mise en oeuvre du procédé représenté schématiquement sur la figure 1,
Figure 3 représente une image sur laquelle apparaît schématiquement une piste d'atterrissage,
Figure 4 montre à titre d'exemple une image de segment caractéristique extrait d'une image prise par une caméra,
Figure 5 représente des intervalles de directions possibles pour la recherche de paires de segments parallèles,
Figure 6 illustre la création de groupements de paires de segments parallèles,
Figure 7 illustre la notion de point de fuite,
Figure 8 représente une image correspondant à celle de la figure 4 après traitement,
Figure 9 est un organigramme pour la première phase du procédé de la figure 1,
Figure 10 est un organigramme pour la seconde phase du procédé de la figure 1, et
Figure 11 représente un organigramme utilisable pour la troisième phase du procédé de la figure 1.

La description qui suit concerne la perception par caméra vidéo appliquée à une fonction automatique d'atterrissage d'aéronefs, par exemple d'avions civils. Le procédé et le dispositif décrits ci-après fournissent à un pilote d'avion un système d'approche finale d'atterrissage automatique rendant son avion le plus autonome possible vis à vis de l'environnement extérieur de l'avion. Dans ce qui suit, on extrait, dans des images vidéo acquises par une caméra et traitées par un calculateur, un écart de l'avion en latéral et vertical afin d'envoyer ces informations par exemple à un système de contrôle et de pilotage automatique de l'avion. La présente invention concerne plus particulièrement les aspects perception, c'est-à-dire acquisition et traitement de l'image, plutôt que les aspects commande et asservissement pour lesquels plusieurs possibilités sont envisageables. Selon une première possibilité, le pilote de l'avion joue le rôle du comparateur et agit sur le pilotage de l'avion en fonction des informations visuelles reçues par le système d'aide à l'atterrissage. Une seconde possibilité concerne une solution automatique complète dans laquelle le système d'aide à l'atterrissage est couplé à un système de pilotage automatique. Ces deux possibilités existent déjà avec des systèmes de l'art antérieur de type ILS (Instrument Landing System).

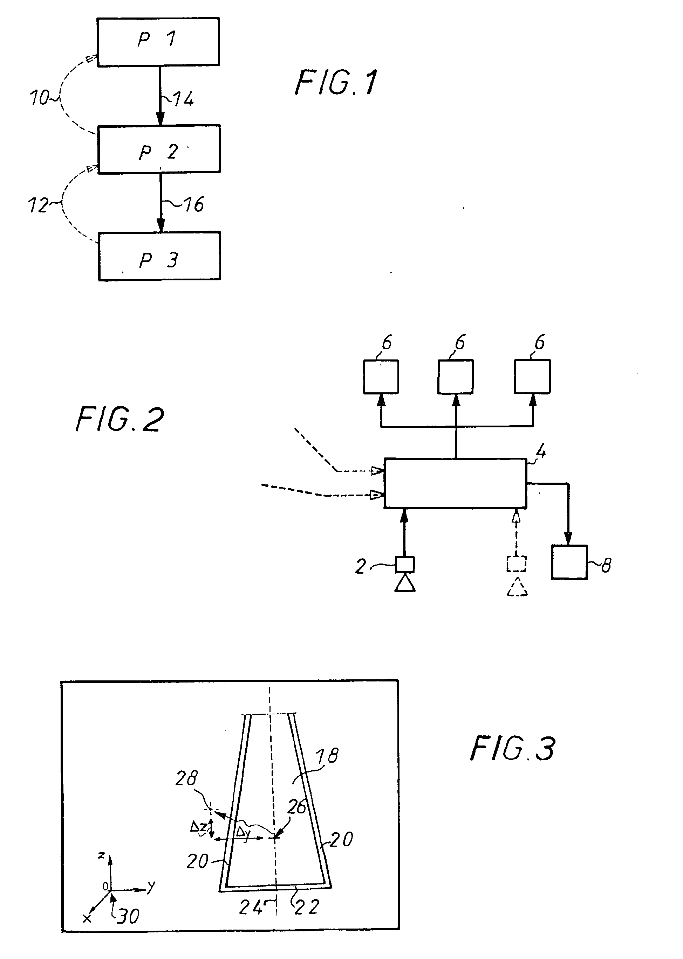

Un dispositif selon l'invention pour aider le pilote en phase finale comporte (figure 2), dans un mode de réalisation préférée, une caméra 2, un calculateur 4, plusieurs afficheurs 6, et un dispositif de pilotage automatique 8.

Une seule caméra est nécessaire dans la présente invention. Toutefois, comme habituellement dans les systèmes aéronautiques, il est préférable d'avoir une seconde caméra en cas par exemple de défaillance de la première. Cette seconde caméra est représentée en pointillés sur la figure 2. Chaque caméra 2 est une caméra de type CCD (Charge Coupled Device ou dispositif à transfert de charge). Une fibre optique relie chaque caméra 2 au calculateur 4. Il s'agit par exemple d'un calculateur de type CIU (Camera Interface Unit). La caméra comporte des moyens pour compresser au standard MJPEG les images vidéo qu'elle transmet au calculateur 4. Chaque caméra 2 travaille dans le domaine du visible. On choisira de préférence une caméra qui soit la plus immune possible par rapport aux variations d'illumination dues au temps, à l'heure dans la journée, au brouillard, à la pluie etc.... En fonction de la qualité de la caméra, le dispositif peut ou ne peut pas fonctionner par tous temps.

Le calculateur de type CIU a pour mission d'effectuer l'acquisition des signaux vidéo au format MJPEG issus de la (des) caméra(s) 2, la décompression de ces images, ainsi que réaliser le traitement de ces images comme cela est décrit plus loin. Ce calculateur doit également transmettre des images aux afficheurs 6 et des informations au dispositif de pilotage automatique 8. Sur la gauche de la figure 2, les flèches en pointillés indiquent que le calculateur est aussi en liaison avec d'autres composants de l'avion tels par exemple une centrale inertielle ou des sondes radio-électriques.

Les afficheurs 6 sont du même type que ceux que l'on trouve généralement dans un cockpit d'avion. Ces afficheurs sont normalement destinés à accueillir les données concernant l'avion (altitude, navigation, alarme, système). Dans le présent dispositif, ces afficheurs sont également prévus pour accueillir des images vidéo. La figure 2 représente trois afficheurs 6 pouvant recevoir de telles images. On suppose alors que dans l'avion équipé du dispositif selon l'invention, au moins trois des afficheurs sur les six généralement disponibles dans un avion sont capables d'afficher des images vidéo. Chacun des afficheurs est relié au calculateur 4 par une liaison de type bus avionique.

Le dispositif de pilotage automatique calcule et applique à l'avion les lois de commandes adéquates à partir de l'écart mesuré par le calculateur 4, de façon à corriger toute déviation par rapport au point visé qui est le point d'impact de l'avion sur la piste dans le cas où les informations fournies par le système d'aide à la navigation doivent permettre un atterrissage entièrement automatique.

La figure 1 donne le synoptique montrant le principe de base du découpage de l'approche finale d'atterrissage en trois phases selon l'invention. La première phase est initialisée alors que l'appareil se trouve encore à quelques kilomètres de la piste d'atterrissage : par exemple 4 à 5 km. Cette première phase P1 est destinée à repérer une zone aéroportuaire sur une prise de vue réalisée par une caméra 2. Une fois cette zone aéroportuaire détectée, une seconde phase P2 commence. Il s'agit là de repérer sur les images suivantes la zone aéroportuaire qui a été détectée au cours de la phase P1. Lorsque l'avion s'approche alors de la zone aéroportuaire, celle-ci grossit de plus en plus sur les images fournies par la caméra 2 jusqu'à sortir du cadre de ces images. On passe alors à une troisième phase P3 au cours de laquelle on détermine la position de l'avion par rapport à la piste d'atterrissage toute proche. Au cours de cette dernière phase, l'avion roule sur la piste ou n'est plus qu'à quelques mètres au dessus de celle-ci.

Une flèche en pointillés 10 sur la figure 1 suggère qu'une réinitialisation est possible de la phase P2 vers la phase P1. En effet, si lors de la phase P2 le dispositif n'arrive plus à suivre la piste d'atterrissage, une nouvelle détection de la zone aéroportuaire peut être effectuée. Une flèche en pointillés 12 suggère également une réinitialisation de la phase P3 vers la phase P2. Une telle réinitialisation est très délicate et devra être évitée. En effet, à ce moment, l'avion est très proche de la piste d'atterrissage et pour des raisons de sécurité, il est important que le dispositif d'aide à l'atterrissage ne perde pas la trace de la piste d'atterrissage.

Comme indiqué plus haut, le passage 14 de la phase P1 à la phase P2 s'effectue lorsque la zone aéroportuaire a été détectée. Le passage 16 de la phase P2 à la phase P3 se réalise par exemple lorsqu'une condition de passage est remplie. Plusieurs conditions de passage sont possibles. Une première condition correspond par exemple à la disparition du seuil de piste dans l'image fournie par la caméra 2. On peut aussi par exemple indiquer que lorsque l'avion est à moins de cinq mètres au-dessus de la piste, la phase P3 est initialisée. D'autres conditions peuvent être définies.

La figure 3 illustre le principe de l'aide à l'atterrissage fournie par le dispositif et le procédé selon l'invention. Cette figure représente une image sur laquelle on a représenté uniquement une piste d'atterrissage 18. Cette piste 18 comporte deux bordures 20 parallèles dans la réalité mais convergentes vers un point de fuite sur l'image fournie par la caméra 2. Ces deux bordures 20 sont reliées à leur base par une bande appelée seuil de piste 22. La piste d'atterrissage 18 présente un axe longitudinal 24 appelé axe de piste. En fonction de la position des bordures de piste 20 et du seuil 22, on définit un point de référence 26 qui est le point d'impact théorique de l'avion sur la piste d'atterrissage 18. Ce point de référence 26 se trouve sur l'axe de piste 24. Le centre de l'image 28 correspond au point visé par la caméra 2. Comme indiqué par le repère 30 sur la figure 3, on définit un repère (0, x, y, z). Les axes y et z sont dans le plan de l'image tandis que l'axe des x est perpendiculaire à ce plan image. Le dispositif d'aide à l'atterrissage détermine la déviation horizontale Δy ainsi que la déviation verticale Δz entre le point de référence 26 et le centre de l'image 28. Dans un atterrissage "semi automatique" le pilote de l'avion visualise sur un afficheur 6 la déviation verticale Δz et la déviation horizontale Δy et agit sur le pilotage de l'avion en fonction de ces informations fournies par le dispositif d'aide au pilotage. En mode d'atterrissage automatique, ces informations sont fournies au dispositif de pilotage automatique 8 qui agit alors sur le pilotage de l'avion pour essayer par exemple de maintenir ces écarts horizontal et vertical le plus près de la valeur 0.

Pour la détection de la zone aéroportuaire (étape P1), la caméra 2 réalise tout d'abord une prise de vue et envoie l'image correspondante au format compressé MJPEG au calculateur 4. L'environnement de la zone aéroportuaire peut être très varié. L'aéroport peut être entouré de bâtiments ou se trouver au milieu de champs, dans un désert, en bord de mer, etc.... Toutefois, on remarque que les zones aéroportuaires présentent des éléments caractéristiques très structurés formés par les pistes, les taxiways, situés en général sur un fond uniforme (herbeux ou désertique). Vue depuis un avion, une zone aéroportuaire comporte donc des segments parallèles (légèrement convergents) qui pourront servir de base pour détecter dans l'image prise par la caméra 2 une zone d'intérêt. Toutefois, il conviendra de distinguer les segments parallèles correspondant à une zone aéroportuaire des segments parallèles qui pourraient être fournis par d'autres éléments apparaissant sur une image : route, immeuble, etc....

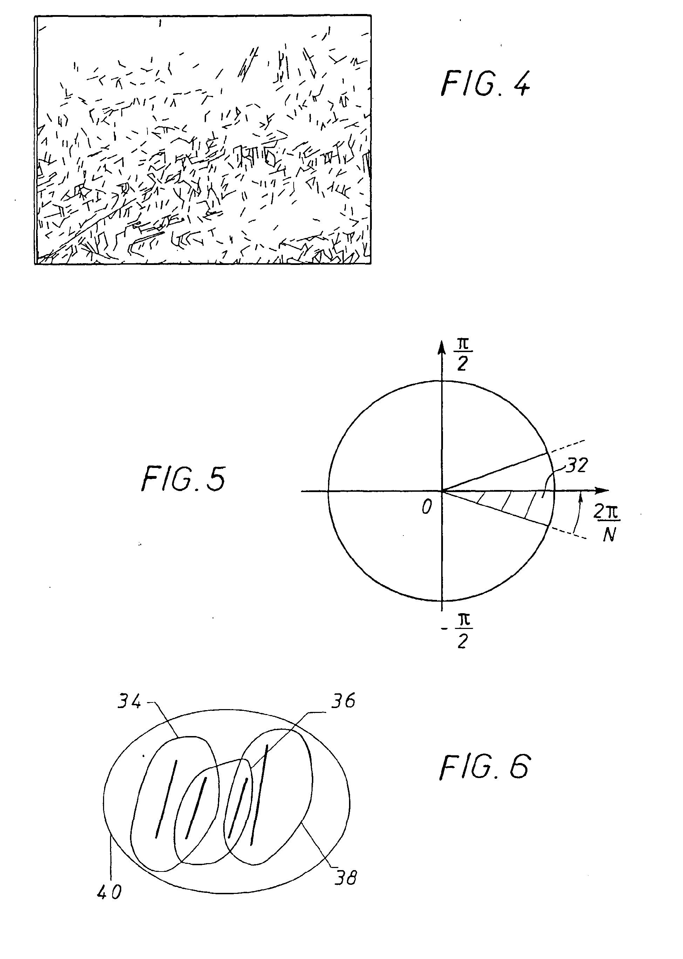

Une première étape dans la détection d'une zone aéroportuaire sur une image fournie par la caméra 2 est d'extraire de cette image les segments 2D caractéristiques de cette image. Ces derniers peuvent être extraits après application sur l'image par exemple d'un filtre de Sobel. Une image obtenue après un tel filtrage est représentée à titre d'exemple sur la figure 4.

Les segments définis au cours de l'étape précédente sont alors classés en fonction de leur orientation dans l'image. On découpe alors de façon régulière l'intervalle des directions possibles [-π/2 ; π/2] en un nombre quelconque de N classes. On a alors N directions balayant un angle de 2π/N (figure 5). La zone hachurée référencée 32 sur la figure 5 illustre la classe de directions [-2π /N ; 0].

Des règles sont alors choisies pour déterminer si deux segments peuvent être jugés comme étant localement parallèles dans le plan image. Ces règles sont par exemple les suivantes :
- les deux segments doivent appartenir à une même classe de directions. Le paramètre N est à déterminer. On choisit par exemple N=20.
- Chaque segment doit posséder une longueur minimale I ₘᵢₙ (par exemple 25 pixels).
- Les deux segments doivent se faire face avec un taux de recouvrement minimum. Ce taux devra rester supérieur à un taux minimum T ₘᵢₙ (par exemple 30%).
- Les deux segments doivent être proches l'un de l'autre. La distance qui les sépare doit être inférieure à une distance seuil appelée par exemple distance ₘₐₓ (par exemple 40 pixels).

Le paramètre N et les valeurs seuil I ₘᵢₙ, T ₘᵢₙ et distance ₘₐₓ doivent être adaptés au cas d'espèce et seront déterminés empiriquement. Ces valeurs dépendent de la caméra et de l'application (ici identification d'une piste d'atterrissage).

Après extraction des paires de segments parallèles, on ferme transitivement la relation qui unit deux paires de segments en les fusionnant (figure 6). Ainsi, on fait des groupes de paires de segments parallèles, chaque paire de segments d'un groupe présentant au moins un segment commun à deux paires de segments de ce groupe. Ainsi sur la figure 6 trois paires de segments 34, 36 et 38 ont été regroupées dans un groupement 40 de paires parallèles. On remarque que la paire de segments 34 a un segment en commun avec la paire de segments 36, que la paire de segments 36 a un segment en commun avec la paire 34 et son autre segment en commun avec la paire 38 et que la paire 38 a un segment en commun avec la paire 36.

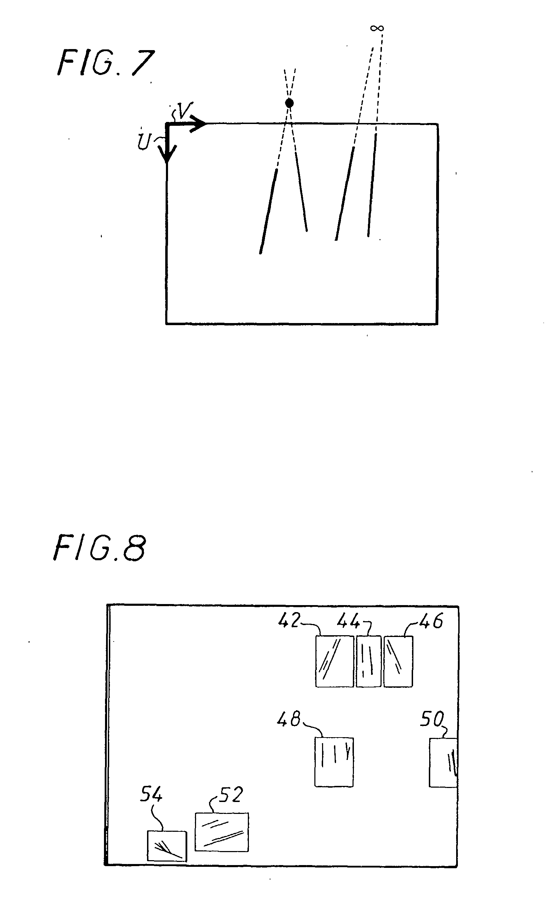

Il est connu que lorsqu'on prend en photo deux lignes parallèles sans que l'axe de prise de vue soit perpendiculaire au plan contenant ces deux lignes parallèles, l'image formée par ces deux lignes parallèles ne présente plus ce parallélisme mais forme deux lignes convergentes vers un point appelé point de fuite. Ainsi, pour déterminer si des segments parallèles d'un groupement 40 de paires de segments 34, 36, 38 correspondent à des lignes parallèles de l'objet photographié, on considère deux à deux tous les segments des groupements et on détermine à chaque fois un point de fuite correspondant (figure 7). On compare ensuite entre eux les points de fuite en calculant la distance euclidienne distance _{fuite} qui les sépare. Si la mesure distance _{fuite} est inférieure à un seuil prédéterminé appelé seuil _{fuite}, alors on crée un groupement FUITE formé de quatre segments. Ainsi par exemple, si comme illustré sur la figure 7, le point de fuite est très éloigné ou à l'infini, les segments correspondants ne pourront être retenus.

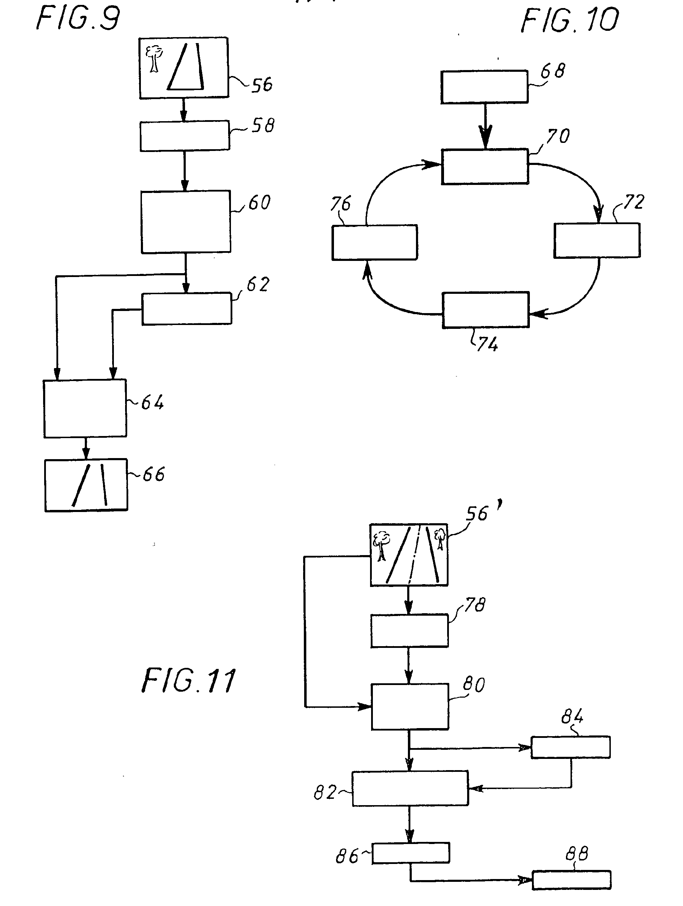

Sur la figure 8, qui correspond à la figure 4, on a uniquement retenu les groupements de paires de segments parallèles tels le groupement 40 de la figure 6. Sur toute l'image n'apparaissent que sept groupements de ce type qui portent les références 42, 44, 46, 48, 50, 52 et 54.

De même que l'on a réalisé des groupements de paires de segments parallèles, on réalise le regroupement de groupements de paires de segments parallèles lorsque dans deux groupements distincts (tel le groupement 40 de la figure 6) apparaissent deux segments d'un même groupement FUITE. Dans le cas de figure illustré sur les figures 4 et 8, on réalise alors le regroupement des groupements 42, 44 et 46.

La figure 9 est un organigramme récapitulant les différentes étapes de la phase P1 telle que décrite ci-dessus. Sur cette figure 9 on reconnaît une image 56 obtenue par la caméra 2. Cette image est numérisée et envoyée vers le calculateur 4. Une première étape 58 consiste à extraire des segments caractéristiques en utilisant le filtre gradient de Sobel couplé à un opérateur d'amincissement et un opérateur d'interpolation polygonale. L'étape 60 suivante consiste à détecter parmi tous les segments caractéristiques déterminés à l'étape 58 ceux qui sont parallèles entre eux et à former alors des groupements de paires de segments parallèles. Tous les segments faisant partie d'un groupement de paires de segments parallèles quelconque sont alors comparés deux à deux pour déterminer, à l'étape 62, leur point de fuite. On regroupe alors les paires de segments dont les points de fuite sont proches afin de réaliser des groupements FUITE. Enfin, la dernière étape 64 réalise le regroupement de groupements de paires de segments parallèles détectés à l'étape 60. Deux groupements distincts seront regroupés si un groupement FUITE possède des segments dans l'un et l'autre de ces groupements de paires de segments parallèles. Après le déroulement de cet algorithme, on obtient une image 66 sur laquelle apparaissent uniquement les segments qui correspondent à des segments parallèles en trois dimensions. Si les valeurs de seuil I ₘᵢₙ, T ₘᵢₙ et distance ₘₐₓ ont été astucieusement choisies, il ne reste plus sur l'image 66 que des segments correspondants à une zone aéroportuaire. Plusieurs pistes sont éventuellement représentées sur cette image 66. Il conviendra par la suite de déterminer sur laquelle de ces pistes l'avion doit atterrir. La sélection de la piste peut être faite automatiquement en fonction d'instructions rentrées au préalable dans le calculateur 4 ou le choix peut être réalisé par le pilote. Dans ce dernier cas, on peut imaginer d'afficher l'image 66, superposée éventuellement à l'image 56, sur un afficheur 6 devant les yeux du pilote.

Une fois la piste d'atterrissage sélectionnée, il convient de reconnaître cette piste sur les images suivantes prises par la caméra 2. Ceci fait l'objet de la phase P2 du procédé décrit ici.

La figure 10 montre un schéma de principe de suivi visuel. Ce schéma comporte un premier module d'initialisation 68 et quatre modules qui se répètent de façon itérative.

Le module d'initialisation 68 permet d'extraire de l'image courante le motif visuel à suivre dans les images suivantes. Dans le cas présent, la position initiale de la piste d'atterrissage est donnée par la phase P1 de détection. Le résultat de ce module d'initialisation 68 consiste à fournir :
- un modèle initial de la cible, ici la piste d'atterrissage, avec une représentation adaptée à la méthode de suivi (contours ou points), et
- une fenêtre dans laquelle l'objet à suivre, la piste d'atterrissage, a été trouvé.

Le premier module de la boucle représenté sur la figure 10 est un module de prédiction 70. Ce module, exécuté à chaque itération, doit générer la position prédite de la piste d'atterrissage dans l'image courante Iₙ en fonction de la position qu'il avait dans l'image précédente Iₙ₋₁, de la fréquence d'acquisition des images et de traitement de ces images et surtout en fonction d'un modèle de la dynamique apparente de la piste d'atterrissage dans la séquence. Ce modèle est en général estimé par filtrage de Kalman. Dans le cas présent, les images sont des images 2D et le mouvement apparent de la piste d'atterrissage sur l'image est provoqué par le mouvement de la caméra 2 par rapport à la piste d'atterrissage fixe.

Le résultat de ce module de prédiction 70 est une position prédite de la piste d'atterrissage sur l'image, sous la forme d'une fenêtre ou d'une sous-image dans laquelle les traitements suivants seront exécutés. La taille de la fenêtre, ou de la sous-image, est fonction de la précision de la prédiction. Cette précision est donnée par exemple par une méthode d'estimation à l'aide d'une matrice de variance sur l'état du système pour le filtrage de Kalman.

Le module suivant est le module d'extraction des caractéristiques 72. Ce module a pour but de fournir une représentation adaptée de la sous image dans laquelle l'objet est recherché. Cette représentation doit être construite de manière rapide et être suffisamment discriminante pour que la recherche de la piste d'atterrissage suivie soit rapide. La représentation sera par exemple réalisée à l'aide de points d'intérêt et/ou de contours et/ou de segments, etc....

Le troisième module représenté sur la boucle de la figure 10 est un module d'appariement 74. Ce dernier va rechercher la piste d'atterrissage dans la région d'intérêt déterminée par le module de prédiction 70. Plusieurs méthodes d'appariements existent : méthode exhaustive, de recherche arborescente, de relaxation, de prédiction-vérification, etc.... Dans tous les cas, il est nécessaire d'exhiber une mesure de similarité entre un sous ensemble de caractéristiques extrait de l'image et le modèle de la cible. Le résultat de ce module consiste en un ensemble d'appariements (image, modèle) et une mesure de confiance dans ces appariements.

Le dernier module de la boucle représenté sur la figure 10 est un module de mise à jour 76 du modèle de la cible. Ce module permet de mettre à jour la représentation de la piste d'atterrissage et de son modèle de dynamique (vitesse du mouvement apparent, etc...).

Au-dessus de cette boucle de suivi visuel, une boucle de contrôle doit être mise en oeuvre afin de vérifier la cohérence du suivi et afin de reprendre d'éventuelles erreurs ou dérives. Cette fonction de contrôle a alors pour but de relancer le module d'initialisation en cas de perte de la piste dans la séquence. Cette fonction de contrôle assure également le passage de la phase P2 à la phase P3.

Un tel suivi visuel peut être également mis en oeuvre pour d'autres applications. Dans l'application au suivi d'une piste d'atterrissage en phase finale d'atterrissage, le module d'initialisation 70 est en partie réalisé au cours de la phase P1 qui fournit un ensemble de segments convergents. Le module d'extraction des caractéristiques 72 est quant à lui exécuté sur la sous image contenant ces segments pour donner un premier modèle de la piste (ensemble de points, contours actifs, etc...). Le module de prédiction 70 peut être omis dans le cas présent. Il suffit de rechercher dans l'image suivante Iₙ₊₁ la piste là où elle se trouvait dans l'image précédente Iₙ.

En fonction du temps nécessaire pour réaliser les différentes étapes de la boucle représentée sur la figure 10, toutes les images de la séquence vidéo ne seront pas analysées. La piste sera recherchée seulement sur une image sur n de la séquence, par exemple, une image sur trois. Plus n sera grand, plus il sera nécessaire d'introduire un module de prédiction 70.

En ce qui concerne les modules d'extraction des caractéristiques 72, d'appariements 74 et de mise à jour du modèle 76, plusieurs techniques peuvent être utilisées. Ces techniques sont connues de l'homme du métier et ne seront pas détaillées ici. On cite uniquement à titre d'exemple la technique de suivi (tracking) de contours polygonaux par corrélation 1D le long des contours et la technique de suivi de contour à l'aide de contours actifs (ou snakes) qui utilise la silhouette de l'objet suivi. D'autres méthodes peuvent également être envisagées dans cette phase de suivi.

La dernière phase P3 est très proche de ce qui existe déjà dans le contexte routier, dans la mesure où l'avion roule sur la piste d'atterrissage ou n'est qu'à quelques mètres au-dessus de celle-ci. Les lignes blanches latérales et centrales de la piste d'atterrissage apparaissent clairement sur l'image, les imperfections du tarmac sont visibles et la texture des différents éléments composant la scène (herbe, béton, terre, etc...) devient discriminante.

Dans le contexte routier, des séquences d'images enregistrées à partir de caméras montées dans un véhicule en mouvement sont évaluées. Ces séquences d'images fournissent des informations sur l'environnement du véhicule qui sont analysées dans le but d'apporter une aide au conducteur se trouvant dans des situations réelles de trafic. Dans le contexte routier, l'objectif de l'analyse des images est de trouver la position du véhicule par rapport à la route. Il en va de même dans le cas de l'avion sur la piste d'atterrissage : il faut trouver sa position par rapport à cette piste.

Deux approches sont couramment utilisées. Une première approche est basée sur la classification des pixels de l'image pour détecter des régions (herbe, béton, ...) et une autre approche est basée sur un modèle géométrique de la route, à partir des discontinuités extraites de l'image.

A titre d'exemple, un algorithme basé sur l'analyse des régions est décrit ci-après pour la réalisation de la phase P3. Il s'agit d'un algorithme de segmentation et de caractérisation des régions de l'image 56'. Il est composé de quatre grandes étapes décrites ci-après.

La première étape 78 doit fournir rapidement une description synthétique de la scène. Elle est réalisée sur une image 56' de faible résolution. Une première partition de l'image est effectuée en divisant celle-ci en cellules carrées de taille 2x2 pixels. Plusieurs classes sont définies en analysant les histogrammes des attributs chromatiques. A chaque cellule est associée une classe, issue d'une division de l'espace des couleurs. La fusion des cellules élémentaires est effectuée en utilisant un graphe d'adjacence (de connexité 4). Finalement, les régions de taille inférieure à un seuil donné sont fusionnées avec la région adjacente ayant la valeur du critère d'homogénéité la plus proche.

Chaque région résultante de la première étape (segmentation couleur) est ensuite caractérisée par sa couleur et sa texture (étape 80). Alors que pour caractériser une région selon ses attributs colorimétriques la moyenne statistique des pixels qui la composent est utilisée, la mesure des attributs de texture est basée sur les histogrammes de somme et de différence. Les attributs générés par ces histogrammes sont la moyenne, la variance, l'énergie, l'entropie, le contraste et enfin l'homogénéité.

Deux techniques sont utilisées pour identifier (étape 82) les éléments (régions) présents dans l'image : la technique bayesienne qui réalise la classification en utilisant l'ensemble des attributs sans effectuer une partition de l'espace des caractéristiques et la technique hiérarchique basée sur un algorithme qui fait une partition efficace de l'espace des caractéristiques (capacité intrinsèque de sélection des attributs). Pour cette identification, on utilise une base d'apprentissage 84 qui est construite en fonction de l'application du présent algorithme.

Chaque région de l'image est, dans la dernière étape 86, assortie de sa nature (étiquetage). Bien que la segmentation couleur fournisse des grandes régions, ces dernières ne correspondent pas obligatoirement aux grandes composantes de la scène. Une étape de fusion est donc nécessaire pour grouper toutes les régions connexes de la scène.

A l'issue de cet algorithme, on obtient un modèle nominatif 88 des différentes régions apparaissant dans l'image 56' et identifié au cours de cette phase. Ceci permet alors de déterminer le positionnement de l'avion par rapport à la piste d'atterrissage.

Le dispositif et le procédé décrits ci-dessus permettent d'obtenir un système de guidage en phase finale d'atterrissage d'un avion autonome par rapport à tout type d'installation extérieur à l'avion. De manière originale, ce système mesure des écarts par rapport à une trajectoire d'atterrissage idéale à partir du traitement perceptuel d'images transmises par un système d'une (ou plusieurs) caméra(s) embarquée(s) à bord de l'avion. Des algorithmes de perception pour les trois phases de l'algorithme représenté sur la figure 1 ont été décrits ci-dessus.

Concernant la détection de la zone aéroportuaire, phase P1, un algorithme nouveau et original basé sur l'extraction de groupements perceptuels a été présenté. Cet algorithme a également été testé et donne de bons résultats. Cet algorithme permet de déterminer sur une image 2D d'un objet 3D des segments qui correspondent à des lignes parallèles dans l'espace.

Les phases de suivi de piste (phases P2 et P3) ont également été testées. En ce qui concerne la phase P2, deux algorithmes testés et décrits à titre d'exemple plus haut ont donné de bons résultats. Pour la dernière phase du procédé selon l'invention, le test a été réalisé avec une base d'apprentissage prévue pour une application différente. Malgré tout, le résultat obtenu est encourageant. Il faut remarquer ici que l'algorithme utilisé et décrit est issu du domaine de la robotique. D'autres algorithmes issus du domaine du suivi de route par un véhicule, qui ont déjà fait leur preuve, peuvent également être utilisés à l'étape P3.

La présente invention ne se limite pas aux diverses formes d'exécution décrites ci-dessus à titre d'exemples non limitatifs mais s'étend également à toutes les variantes de réalisation à la portée de l'homme du métier, dans le cadre des revendications ci-après.

## Revendications

1. Procédé de guidage en phase finale d'atterrissage pour un aéronef, comportant les étapes suivantes :
a) prise de vue du sol à partir d'un dispositif de prise de vue (2) embarqué à bord de l'aéronef et obtention d'une image (56, 56'),
b) analyse de l'image (56) par un calculateur (4) dans le but de détecter une zone aéroportuaire,
c) détection par le calculateur (4) d'une zone aéroportuaire et sélection d'une piste (18) pour l'atterrissage,
d) suivi de la piste d'atterrissage (18) sélectionnée durant l'approche de l'aéronef, le calculateur (4) repérant sur les images fournies par le dispositif de prise de vue (2) la piste d'atterrissage sélectionnée,
e) suivi de la piste d'atterrissage lorsque l'aéronef est très proche du sol, le calculateur (4) analysant des images (56') fournies par le dispositif de prise de vue afin de déterminer la position de l'aéronef par rapport à la piste d'atterrissage.

2. Procédé de guidage selon la revendication 1, **caractérisé en ce que** si la piste (18) est perdue au cours du suivi de l'étape d), une réinitialisation consistant à retourner à l'étape b) est réalisée.

3. Procédé de guidage selon l'une des revendications 1 ou 2, **caractérisé en ce qu'**à l'étape b) l'analyse est réalisée en recherchant (58) sur l'image (56) des segments de droites sensiblement parallèles et **en ce que** la détection d'une piste d'atterrissage est réalisée en appairant (60) de tels segments de droite.

4. Procédé de guidage selon la revendication 3, **caractérisé en ce que** la recherche de segments parallèles s'effectue en découpant de façon régulière l'intervalle des directions possibles [-π/2 ; π/2] en N classes et en associant chaque segment à une classe, deux segments étant alors considérés comme parallèles s'ils appartiennent à une même classe.

5. Procédé de guidage selon la revendication 4, **caractérisé en ce que** deux segments parallèles sont retenus lorsque les conditions suivantes sont remplies :
- ces segments appartiennent à une même classe de directions,
- chacun de ces segments présente une longueur minimale,
- ces deux segments se font face avec un taux de recouvrement minimum,
- la distance séparant ces deux segments est inférieure à une valeur prédéterminée.

6. Procédé de guidage selon la revendication 5, **caractérisé en ce que** pour chaque paire de segments parallèles un point de fuite est déterminé comme étant le point d'intersection théorique des deux segments sensiblement parallèles et **en ce que** deux paires de segments sont regroupées dans la mesure où la distance entre les deux points de fuite correspondants est inférieure à un seuil prédéterminé.

7. Procédé de guidage selon l'une des revendications 1 à 6, **caractérisé en ce que** l'étape d) de suivi de la piste d'atterrissage comporte les étapes élémentaires suivantes :
d1) initialisation (68) : la piste d'atterrissage sélectionnée est extraite de l'image et modélisée et une fenêtre dans laquelle la piste a été trouvée est définie,
d2) prédiction (70) : la position de la piste d'atterrissage dans l'image courante est prédite en fonction de la position occupée dans l'image précédente et une fenêtre correspondante est définie,
d3) extraction de caractéristiques (72) : une représentation adaptée des contours et/ou points d'intérêt de la fenêtre est fournie,
d4) appariement (74) : la piste d'atterrissage est recherchée dans la fenêtre en fonction de la prédiction, et
d5) si nécessaire, mise à jour (76) de la représentation de la piste d'atterrissage et/ou de la vitesse du mouvement apparent de cette piste,
les étapes d2) à d5) étant des étapes itératives.

8. Procédé de guidage selon l'une des revendications 1 à 7, **caractérisé en ce que** le suivi de la piste d'atterrissage à l'étape e) est réalisé en analysant sur l'image courante la couleur et la texture de ses pixels afin de classifier ces pixels comme appartenant ou non à la piste d'atterrissage.

9. Procédé de guidage selon l'une des revendications 1 à 7, **caractérisé en ce que** le suivi de la piste d'atterrissage à l'étape e) est réalisé en recherchant sur l'image le bord de la piste et/ou un marquage sur la piste.

10. Procédé de guidage selon l'une des revendications 1 à 9, **caractérisé en ce que** la piste d'atterrissage comporte deux bords longitudinaux (20) parallèles reliés à une extrémité par un seuil (22), et **en ce que** le passage de l'étape d) à l'étape e) se réalise lorsque le seuil (22) n'est plus visible sur les images.

11. Dispositif de guidage en phase finale d'atterrissage d'un avion ou similaire, comportant au moins un calculateur (4) et un afficheur (6) placé dans le cockpit, une caméra (2) reliée audit calculateur (4), ledit calculateur (4) présentant des moyens pour effectuer l'acquisition et le traitement d'images vidéo, ainsi que des moyens d'analyse d'image afin d'y repérer une éventuelle zone aéroportuaire, des moyens de détection d'une telle zone, des moyens de repérage d'une piste d'atterrissage prédéterminée et de suivi de cette piste sur des images successives, et des moyens d'analyse d'images afin de réaliser un suivi de la piste lorsque l'avion ou similaire est proche du sol, et en ce que ledit calculateur (4) est relié à l'afficheur (6) placé dans le cockpit.

12. Dispositif de guidage selon la revendication 11, **caractérisé en ce que** la caméra (2) est une caméra de type CCD (Charge Coupled Device ou dispositif à transfert de charge).

13. Dispositif de guidage selon l'une des revendications 11 ou 12, **caractérisé en ce qu'**il comporte deux caméras vidéo (2).

14. Dispositif de guidage selon l'une des revendications 11 à 13, **caractérisé en ce que** chaque caméra (2) est reliée audit calculateur (4) via une liaison fibre optique.

15. Dispositif de guidage selon l'une des revendications 11 à 14, **caractérisé en ce que** le calculateur (4) est relié à un dispositif de pilotage automatique (8).

16. Aéronef, **caractérisé en ce qu'**il comporte un dispositif de guidage selon l'une des revendications 11 à 15.

## Claims

1. A method of guiding an aircraft in the final landing phase, comprising the following steps:
a) imaging of the ground from an imaging device (2) on board the aircraft to obtain an image (56, 56'),
b) analysis of the image (56) by a computer (4) to detect an airport area,
c) detection by the computer (4) of an airport area and selection of a runway (18) for landing,
d) tracking of the selected landing runway (18) during the approach of the aircraft, the computer (4) identifying the selected landing runway on the images supplied by the imaging device (2), and
e) tracking of the landing runway when the aircraft is very close to the ground, the computer (4) analysing images (56') supplied by the imaging device to determine the position of the aircraft relative to the landing runway.

2. The guidance method as claimed in claim 1, **characterized in that** a reinitialization consisting of a return to step b) is effected if the runway (18) is lost during tracking in step d).

3. The guidance method as claimed in one of claims 1 or 2, **characterized in that**, in step b), the analysis is carried out by searching (58) the image (56) for substantially parallel straight line segments, and **in that** a landing runway is detected by pairing (60) such straight line segments.

4. The guidance method as claimed in claim 3, **characterized in that** parallel segments are searched for by regularly dividing the range of possible directions [-π/2; π/2] into N classes and associating each segment with a class, two segments then being considered to be parallel if they belong to the same class.

5. The guidance method as claimed in claim 4, **characterized in that** two parallel segments are retained if the following conditions are satisfied:
- these segments belong to the same class of directions,
- each of these segments has a minimum length,
- these two segments are face-to-face with a minimum overlap,
- the distance separating these two segments is less than a predetermined value.

6. The guidance method as claimed in claim 5, **characterized in that**, for each pair of parallel segments, a vanishing point is determined as being the theoretical point of intersection of the two substantially parallel segments, and **in that** two pairs of segments are grouped together if the distance between the two corresponding vanishing points is less than a predetermined threshold.

7. The guidance method as claimed in one of claims 1 to 6, **characterized in that** step d) of tracking the landing runway comprises the following steps:
d1) initialization (68): the selected landing runway is extracted from the image and modelled and a window in which the runway has been found is defined,
d2) prediction (70): the position of the landing runway in the current image is predicted as a function of the position occupied in the preceding image and a corresponding window is defined,
d3) extraction of characteristics (72): a suitable representation of the contours and/or points of interest in the window is supplied,
d4) pairing (74): the landing runway is searched for in the window as a function of the prediction, and
d5) if necessary, updating (76) of the representation of the landing runway and/or of the speed of apparent movement of this runway,
steps d2) to d5) being iterative steps.

8. The guidance method as claimed in one of claims 1 to 7, **characterized in that** the tracking of the landing runway in step e) is carried out by analysing the colour and the texture of the pixels of the current image in order to classify these pixels as belonging to the landing runway or not.

9. The guidance method as claimed in one of claims 1 to 7, **characterized in that** the tracking of the landing runway in step e) is carried out by searching the image for the edge of the runway and/or markings on the runway.

10. The guidance method as claimed in one of claims 1 to 9, **characterized in that** the landing runway comprises two parallel longitudinal edges (20) connected at one end by a threshold (22), and **in that** the passage from step d) to step e) occurs when the threshold (22) is no longer visible on the images.

11. A device for guiding an aeroplane or the like in the final landing phase, comprising at least one computer (4) and a display (6) placed in the cockpit, a camera (2) connected to said computer (4), said computer (4) having means for acquiring and processing video images and also means for analysing an image so as to identify therein a possible airport area, means for detecting such an area, means for identifying a predetermined landing runway and for tracking this runway on successive images, and means for analysing images so as to track the runway when the aeroplane or the like is close to the ground, and in that said computer (4) is connected to the display (6) placed in the cockpit.

12. The guidance device as claimed in claim 11, **characterized in that** the camera (2) is a camera of the CCD (Charge Coupled Device) type.

13. The guidance device as claimed in one of claims 11 or 12, **characterized in that** it comprises two video cameras (2).

14. The guidance device as claimed in one of claims 11 to 13, **characterized in that** each camera (2) is connected to said computer (4) via an optical fibre link.

15. The guidance device as claimed in one of claims 11 to 14, **characterized in that** the computer (4) is connected to an automatic pilot (8).

16. An aircraft, **characterized in that** it comprises a guidance device as claimed in one of claims 11 to 15.

## Patentansprüche

1. Verfahren zum Leiten eines Flugzeugs während der Endphase der Landung, das folgende Schritte umfasst :
a) Aufnahme des Bodens mittels einer an Bord des Flugzeugs mitgeführten Bildaufnahmevorrichtung (2) und Erlangung eines Bildes (56, 56'),
b) Analyse des Bildes (56) mittels eines Rechners (4), um einen Flughafenbereich zu erfassen,
c) Erfassung eines Flughafenbereichs durch den Rechner (4) und Auswahl einer Landebahn (18),
d) Verfolgung der gewählten Landebahn (18) während des Anflugs des Flugzeugs, wobei der Rechner (4) auf den von der Bildaufnahmevorrichtung gelieferten Bildern die gewählte Landebahn anpeilt,
e) Verfolgung der Landebahn, wenn das Flugzeug sehr nah am Boden ist, wobei der Rechner (4) die von der Bildaufnahmevorrichtung gelieferten Bilder (56') analysiert, um die Position des Flugzeugs zur Landebahn zu bestimmen.

2. Leitverfahren nach Anspruch 1, **dadurch gekennzeichnet, dass** wenn die Landebahn (18) während der Verfolgung des Schritts d) verloren geht, eine Rückstellung auf Null ausgeführt wird, indem zum Schritt b) zurückgekehrt wird.

3. Leitverfahren nach einem der Ansprüche 1 oder 2, **dadurch gekennzeichnet, dass** der Schritt b) der Analyse erfolgt, indem auf dem Bild (56) im Wesentlichen parallele Segmente von Geraden gesucht werden (58), und dass das Erfassen einer Landebahn erfolgt, indem solche Segmente von Geraden gepaart werden (60).

4. Leitverfahren nach Anspruch 3, **dadurch gekennzeichnet, dass** das Suchen von parallelen Segmenten erfolgt, indem das Intervall der möglichen Richtungen [-π/2 ; π2] in N Klassen gleichmäßig zugeschnitten wird und jedes Segment einer Klasse zugeordnet wird, wobei zwei Segmente dann als parallel betrachtet werden, wenn sie ein und derselben Klasse angehören.

5. Leitverfahren nach Anspruch 4, **dadurch gekennzeichnet, dass** zwei parallele Segmente festgehalten werden, wenn folgende Bedingungen erfüllt sind:
- diese Segmente gehören ein und derselben Richtungsklasse,
- jeder dieser Segmente weist eine Mindestlänge auf,
- diese beiden Segmente stehen einander gegenüber mit einer Mindestüberlappung,
- der Abstand zwischen dieser beiden Segmente ist kleiner als ein vorgegebener Wert.

6. Leitverfahren nach Anspruch 5, **dadurch gekennzeichnet, dass** für jedes Paar von parallelen Segmenten ein Fluchtpunkt als der theoretische Schnittpunkt der beiden in Wesentlichen parallelen Segmente bestimmt wird, und dass zwei Paare von Segmenten zusammengeführt werden, wenn der Abstand zwischen der beiden entsprechenden Fluchtpunkten kleiner als eine vorgegebenen Schwelle ist.

7. Leitverfahren nach einem der Ansprüche 1 bis 6, **dadurch gekennzeichnet, dass** der Schritt d) der Verfolgung der Landebahn die folgenden elementare Schritte aufweist:
d1) Initialisierung (6): die ausgewählte Landebahn wird aus dem Bild extrahiert und modelliert, und ein Fenster, in welchem die Landebahn gefunden wurde, wird definiert,
d2) Voraussage (70): die Position der Landebahn im laufenden Bild wird abhängig von der im vorhergehenden Bild eingenommenen Position vorausgesagt, und ein entsprechendes Fenster wird definiert,
d3) Extrahierung von Charakteristiken (72): es wird eine den Konturen und/oder den Interessenpunkten angepasste Darstellung des Fensters bereitgestellt,
d4) Anpassung (74): die Landebahn wird abhängig von der Voraussage im Fenster gesucht, und
d5) Aktualisierung (76), wenn nötig, der Darstellung der Landebahn und/oder der Geschwindigkeit der scheinbaren Bewegung dieser Landebahn,
wobei die Schritte d2) bis d5) sich iterative Schritte sind.

8. Leitverfahren nach einem der Ansprüche 1 bis 7, **dadurch gekennzeichnet, dass** die Verfolgung der Landebahn bei dem Schritt e) **dadurch** realisiert wird, dass auf dem laufenden Bild die Farbe und die Beschaffenheit ihrer Pixel analysiert wird, um diese Pixel als zur Landebahn gehörend oder nicht zu klassifizieren.

9. Leitverfahren nach einem der Ansprüche 1 bis 7, **dadurch gekennzeichnet, dass** die Verfolgung der Landebahn beim Schritt e) **dadurch** realisiert wird, das auf dem Bild der Rand der Landebahn und/oder eine Markierung auf der Landebahn gesucht wird,

10. Leitverfahren nach einem der Ansprüche 1 bis 9, **dadurch gekennzeichnet, dass** die Landebahn zwei parallele Längsränder (20) aufweist, die mit einem Ende über eine Schwelle (22) verbunden sind, und dass der Übergang vom Schritt d) zum Schritt e) realisiert wird, wenn die Schwelle (22) in den Bildern nicht mehr sichtbar ist.

11. Leitvorrichtung in der Endphase der Landung eines Flugzeugs oder dergleichen, mit mindestens einem Rechner (4) und einer im Cockpit angeordneten Anzeige (5), einer mit dem Rechner (4) verbundenen Kamera (2), wobei der Rechner (4) Mittel zum Erfassen und Verarbeiten von Videobildern, Mittel zum Analysieren des Bildes, um einen eventuellen Flughafenbereich zu orten, Mittel zum Erfassen eines solchen Bereichs, Mittel zum Anpeilen einer vorgegebenen Landebahn und zum Verfolgen dieser Landebahn auf aufeinanderfolgenden Bildern und Mittel zum Analysieren von Bildern aufweist, um eine Verfolgung der Landebahn zu realisieren, wenn sich das Flugzeug oder dergleichen dem Boden nähert, und dass der Rechner (4) mit der im Cockpit angeordneten Anzeige (6) verbunden ist.

12. Leitvorrichtung nach Anspruch 11, **dadurch gekennzeichnet, dass** die Kamera (2) eine Kamera vom Typ CCD (Charge Couple Device - ladungsgekoppelter Speicher) ist.

13. Leitvorrichtung nach einem der Ansprüche 11 oder 12, **dadurch gekennzeichnet, dass** sie zwei Videokameras (2) aufweist.

14. Leitvorrichtung nach einem der Ansprüche 11 bis 13, **dadurch gekennzeichnet, dass** jede Kamera (2) mit dem Rechner (4) über eine Lichtwellenleiter-Verbindung verbunden ist.

15. Leitvorrichtung nach einem der Ansprüche 11 bis 14, **dadurch gekennzeichnet, dass** der Rechner mit einer Autopilotvorrichtung (8) verbunden ist.

16. Flugzeug, **dadurch gekennzeichnet, dass** es eine Leitvorrichtung nach einem der Ansprüche 11 bis 15 aufweist.
